## Europäisches Patentamt

## European Patent Office

## Office européen des brevets

(11) Publication number: **0 178 938**
**B1**

# EUROPEAN PATENT SPECIFICATION

(45) Date of publication of patent specification: **16.01.91**

(21) Application number: **85307514.1**

(22) Date of filing: **17.10.85**

(51) Int. Cl.⁵: **H 04 N 5/225,** H 04 N 9/09, H 04 N 5/76, H 04 N 9/79, H 03 H 15/00

(54) Television apparatus and method.

(30) Priority: **17.10.84 US 661656**
**03.10.85 US 782201**

(43) Date of publication of application:
**23.04.86 Bulletin 86/17**

(45) Publication of the grant of the patent:
**16.01.91 Bulletin 91/03**

(84) Designated Contracting States:
**DE FR GB NL SE**

(56) References cited:
EP-A-0 103 488
DE-A-1 946 199
GB-A-1 536 232
GB-A-2 135 851
US-A-3 624 285

(73) Proprietor: **NEW YORK INSTITUTE OF TECHNOLOGY**
**Wheatley Road**
**Old Westbury, New York 11568 (US)**

(72) Inventor: **Glenn, William E.**
**650 Royal Plaza**
**FT. Lauderdale Florida 33301 (US)**

(74) Representative: **Skone James, Robert Edmund et al**
**GILL JENNINGS & EVERY 53-64 Chancery Lane London WC2A 1HN (GB)**

Courier Press, Leamington Spa, England.

## Description

This invention relates to techniques for producing television signals and, more particularly, to an apparatus and method for producing electronic video signals representative of a scene, the signals including a high definition component that has a reduced bandwidth.

An electronic video signal (television signal) can be encoded at reduced bandwidth by lowering the frame refresh rate of the high spatial frequency components, while maintaining the frame refresh rate of at least a portion of the low spatial frequency components at the standard rate. If done in a specified manner, this will not cause substantial degradation in the ultimately displayed image, since human vision cannot perceive changes in high spatial resolution information at as fast a rate as it can perceive changes in low spatial resolution information. Accordingly, as has been previously set forth, an electronic video encoding and decoding system can be devised which takes advantages of this, and other, characteristics of human vision by encoding higher spatial resolution video components to be at a temporal information rate which approximately corresponds to the highest rate actually perceived by human vision for such components; thereby eliminating the need to encode these components at a higher rate, which inherently wastes bandwidth. Also as we have previously demonstrated, the low spatial resolution information can be generated in a form which is compatible with standard television video, e.g. NTSC video.

It is the main object of the present invention to provide an improved apparatus and method for generating electronic video signals capable of providing reduced bandwidth.

This object is achieved by the features claimed in independent claims 1, 13, 14 and 16.

In one form of the present invention, in accordance with claim 1, video camera apparatus for generating video signals representative of images of a scene comprises first video imaging means and second video imaging means: and optical means for directing light from the scene to the first and second video imaging means; and is characterised by means for scanning the first video imaging means at a first frame rate; means for scanning the second video imaging means at a second frame rate which is slower than the said first frame rate; and means for combining components of the outputs of the first and second video imaging means. In one embodiment, the optical means directs light from the scene alternately to the first and second video imaging devices, and makes efficient use of available light from a scene being imaged. Typically, but not necessarily, the first video imaging device is scanned at a conventional 30 frames per second. The scanning rate of the second video imaging device is preferably not greater than 15 frames per second. Further means can be provided for recording, and/or transmitting, and/or displaying the outputs of the video imaging device after further processing, to be described.

In one embodiment of this form of the invention, a colour television camera and a monochrome television camera are provided and receive substantially the same optical image. The colour television camera is scanned at the first frame rate, and the monohrome television camera is scanned at the slower second frame rate. An improved technique is also provided for recording the camera outputs, at reduced bandwidth as compared to a regular high definition television signal, on a video recording device having at least two recording channels, as follows. The luminance component signal from the colour television camera (which is typically operating at conventional resolution and frame rate) is recorded on one of the recording channels of the video recording device. The output of the monochrome television camera (which may be a high definition camera operating at the slower frame rate) is combined with colour component signals from the colour television camera to obtain a combined signal, and this combined signal is recorded on the other channel of the video recording device.

In another embodiment of this form of the invention, four solid state video imaging devices are utilized. Two of the solid state video imaging devices are employed to respectively obtain the conventional resolution luminance signal and a high definition component of the luminance signal. The image on one of these video imaging devices is displaced by one diagonal pixel position with respect to the image on the other video imaging device. The other two video imaging devices are used to develop colour signals and, again, the frame rates of the four video imaging devices are selected to save bandwidth while maintaining picture quality as perceived by the eye of the ultimate viewer.

As described in further detail below, there are a number of advantages which follow from the techniques described, including the following:

a) Since it is not necessary to derive the standard resolution information from a fast scan of the high resolution camera, the high resolution camera can be scanned at the slower frame rate at which the high resolution information is to be recorded and/or transmitted. Accordingly, there is more time for light to be integrated at each elemental area of the high definition camera's photoresponsive surface; thereby enhancing the signal-to-noise ratio of the high resolution signal. Also, it is not necessary to subsequently reduce the frame refresh rate of the high definition information to obtain the desired reduced bandwidth high definition components for recording and/or transmission.

b) Due to the characteristics of human vision it is not necessary to present the colour information with as much spatial or temporal resolution as the luminance information. Accordingly, the high resolution camera can be a monochrome camera, which utilizes, for example, a single camera tube or imaging chip, thereby reducing expense and complexity.

c) Since a conventional interlaced scan can be used for the standard resolution camera, a progressive (non-interlaced) scan can be used for the high definition camera, thereby resulting in enhanced high resolution performance, particularly when camera tubes (rather than solid state imagers) are employed.

In another form of the invention, there is provided an improved technique for temporally processing a video signal by providing temporal enhancement that is tailored to fit the temporal responsiveness of the human eye.

Further subsidiary features of the invention will become more readily apparent from the following detailed description when taken in conjunction with the accompanying drawings, in which:—

Figure 1 is a block diagram, partially in schematic form, of an apparatus in accordance with one form of the invention, and which can be used to practice a form of the method of the invention;

Figure 2 is a graph of the spatial frequency response of the transient neuron system and the sustained neuron system of human vision;

Figure 3 is a graph of the temporal frequency response of the transient neuron system and the sustained neuron system of human vision;

Figure 4 is a block diagram, partially in schematic form, of a video camera and recording system in accordance with an embodiment of the invention and which can be used to practice a form of the method of the invention;

Figure 5 is a block diagram of an embodiment of an apparatus for playback of the video recording of Figure 4;

Figure 6 is a block diagram, partially in schematic form, of another embodiment of a video camera and recording system in accordance with a form of the invention, and which can be used to practice a form of the method of the invention;

Figure 7 is a broken-away diagram which shows a superposition of pixel positions of video imaging devices of Figure 6;

Figure 8 is a block diagram of an embodiment of an apparatus for playback of the video recording of Figure 6;

Figure 9 is a block diagram of an enhancing temporal filter in accordance with a form of the invention;

Figure 10 is a block diagram, partially in schematic form, of an apparatus in accordance with an improvement on the Figure 1 embodiment;

Figure 11 shows a rotatable reflective shutter as used in the Figure 10 embodiment;

Figure 12 shows the encoder disk of the optical encoder as used in the Figure 10 embodiment;

Figure 13 is a block diagram of the synchronisation, timing and motor control circuit of the Figure 10 embodiment; and

Figure 14, which includes graphs 14A, 14B and 14C, illustrates the nature of signals utilized and the shutter status in the described embodiment of the invention.

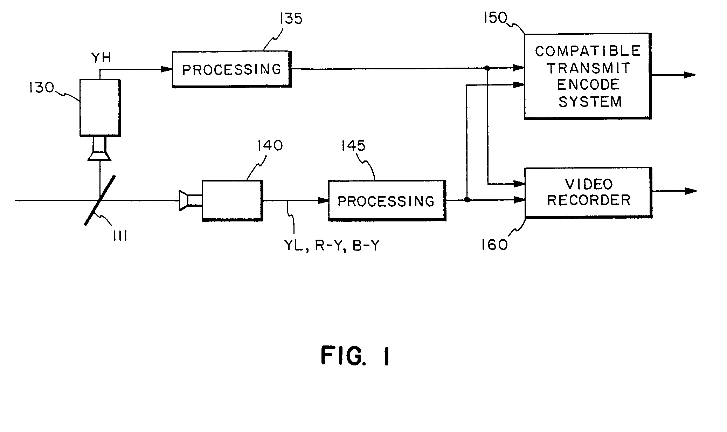

Figure 1 illustrates a simplified embodiment of a video camera system with high definition capability, in accordance with a form of the invention. Light received from a scene being viewed is split by a beam splitter 111 into beams that are respectively received by video image sensors 130 and 140 which, in this illustrated embodiment, are television cameras. The camera 140 is a standard resolution (e.g., 525 line for RGB) colour television camera operating at a standard scan rate; i.e. at 30 interlaced frames (2 interlaced fields per frame) per second. The outputs of camera 140 are designated as the standard or low resolution luminance signal, YL, and colour difference signals, R−Y and B−Y. The television camera 130, in this embodiment, is a high definition monochrome television camera which may have, for example 1,050 lines of resolution (as compared to the standard 525 lines of resolution for camera 140). The high resolution camera 130 is scanned at a slower scan rate than the other camera; for example a scan rate of 7.5 or 15 frames per second.

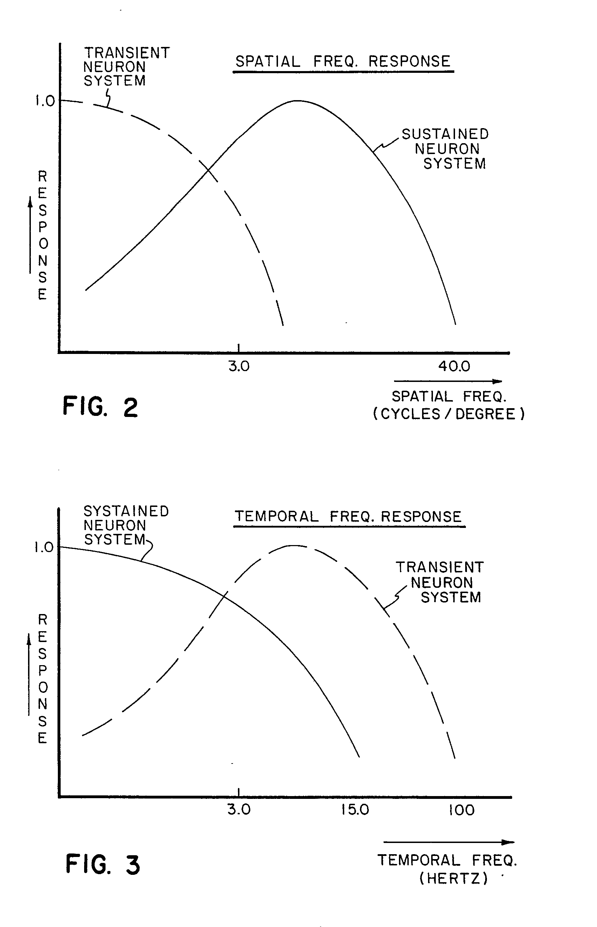

As described in our prior Patent Specification EU—A—0103488, it has been found that two different types of neuron systems or channels are used in vision. One type of neuron system, which detects low resolution imagery is relatively sensitive to temporel transients and has a time constant for build-up and decay of information that is believed to be about 40 to 80 milliseconds. A second type of neuron system is apparently used for transmitting relatively high resolution information from the fovea. This neuron system is believed to have a composite persistence and masking time constant of about 200 to 350 milliseconds. Figures 2 and 3 show the spatial and temporal response of these two systems in humans. These channels have been referred to as "transient" and "sustained" neuron systems. The sustained system is specialized for pattern detection. It has a relatively poor temporal response but relatively good resolution. The transient system is specialized for motion detection. It has relatively poor resolution but relatively good temporal response. In addition to the normal response, a transient caused by motion reduces perception in both systems for a period of about 300 milliseconds. An encoding system can be designed to have spatial and temporal characteristics which match the human visual system, and results in a saving of bandwidth. In the present embodiment of the invention the characteristics of the camera system, along with and/or temporal filtering provide this match, and other advantages. Also, an enhanced temporal filtering technique which can be used with the previously disclosed encoder, or with the present camera system, or with conventional television processing, is set forth.

Referring again to Figure 1, the outputs of television cameras 130 and 140 are respectively coupled to processing circuitry designated by the blocks 135 and 145, the respective natures of which will be described hereinbelow in conjunction with the more detailed block diagrams. The high definition luminance signal output from processing circuitry 135, and the low (or standard) resolution luminance and colour difference signals are shown in the simplified diagram of Figure 1 as being coupled to transmit circuitry 150 and to video recording circuitry 160. The nature of the processing circuits will be described in further detail hereinbelow. Also, it will be understood that the techniques for storing encoding, transmitting, receiving and decoding, as described in our above-mentioned Patent Specification, can be utilized in conjunction with the invention hereof.

A form of the present invention, which utilizes high and low (or standard) resolution video image sensors, such as the two television cameras of Figure 1, scanned at different rates, has a number of operational advantages, including the following:

a) Since it is not necessary to derive the low (or standard) resolution information from a fast scan (e.g. the 30 frames per second conventional scan rate) of the high resolution camera (since such information can be obtained from the separate low resolution camera scanned at the standard scan rate), the high resolution camera can be scanned at the slow scan rate (for example, 7.5 or 15 frames per second) at which the high resolution information is to be recorded and/or transmitted. Accordingly, there is more time for light to be integrated at each elemental area of the camera's photoresponsive surface; thereby enhancing the signal-to-noise ratio of the high resolution signal. Also, it is not necessary to subsequently reduce the frame refresh rate of the high definition information to obtain the desired reduced bandwidth high definition components for recording and/or transmission. [It may be desirable in some circumstances, however, to "oversample" the high definition signal, such as at a field rate of 15 frames per second, and then temporally integrate down to 7.5 fields per second.]

b) As described in our above-mentioned Patent Specification EU—A—0103488, due to the characteristics of human vision it is not necessary to present the colour information with as much spatial or temporal resolution as the luminance information. Accordingly, the high resolution camera can be a monochrome camera, which utilizes, for example, a single camera tube or imaging chip, thereby reducing expense and complexity.

c) Since a conventional interlaced scan can be used for the low (or standard) resolution camera, a progressive (non-interlaced) scan can be used for the high definition camera, thereby resulting in enhanced high resolution performance, particularly when camera tubes (rather than solid state imagers) are employed.

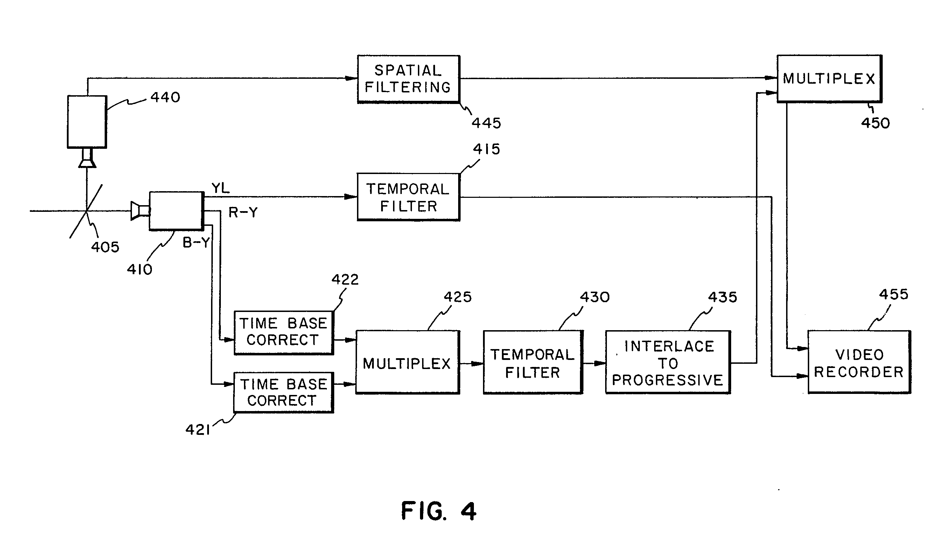

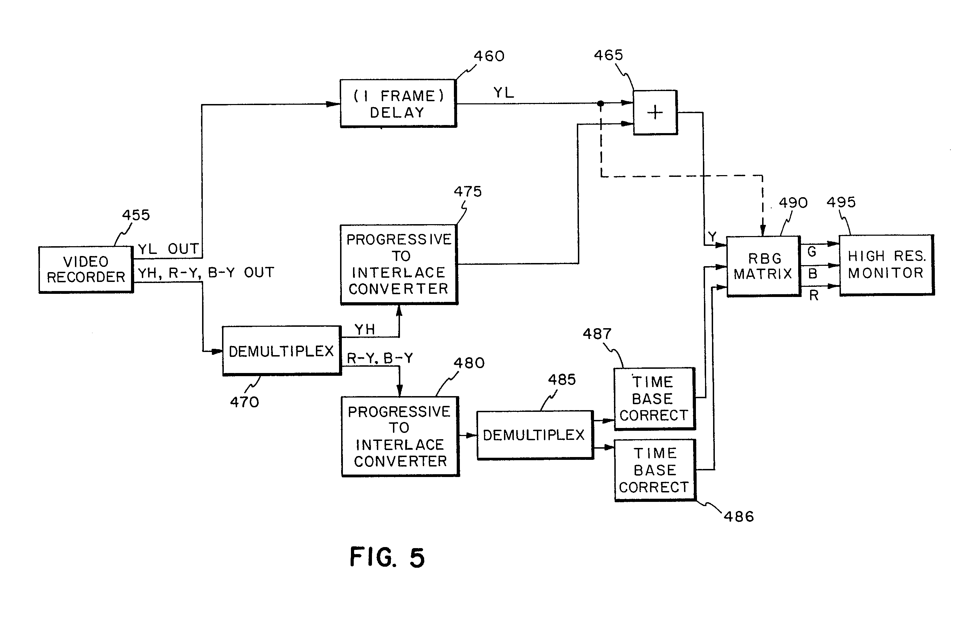

Figures 4 and 5 show a video recording and playback system which includes features of a form of the invention. In the recording system of Figure 4, television cameras 410 and 440 are provided, as in Figure 1. In this embodiment, the camera 440 is a high resolution (e.g. 1050 lines) monochrome camera which is progressively scanned at 15 frames per second, and the camera 410 is a low (standard) resolution (525 lines) camera which is scanned (for NTSC) at 30 interlaced frames (60 fields) per second. The television cameras 410 and 440 are optically registered on the scene. In this embodiment, the cameras receive light from the scene via beam splitter 405. Preferably, the television cameras are synchronized electronically; i.e. their sync and drive signals are derived from common timing signals, although the field rate of camera 410 is four times faster. The outputs of camera 410 are designated YL, R−Y and B−Y. The low (standard) resolution luminance signal is coupled to a temporal filter 415, which may include enhanced temporal filtering, of the type described hereinbelow, which is matched to the temporal sensitivity of human vision. The output of temporal filter 415 is one input to a two channel video recorder 455, which may be for example a "Betacam" type of video recorder manufactured by Sony Corp., or any suitable video recorder having two or more simultaneous recording channels. The colour difference signals are respectively coupled to time base correctors 421 and 422. In the present embodiment time base corrector 422, which receives the R−Y colour difference signal, is operative to compress the time base of each scanline of the R−Y signal to 3/4 of its original time base period, and the time base corrector 421 is operative to compress the time base of each scanline of the B−Y signal to 1/4 of its original time base period. The outputs of time base correctors 421 and 422 are coupled to multiplexer 425, which operates to multiplex the time base corrected colour difference signals, so as to put them in time series on a single output line. This output is, in turn, coupled to temporal filter 430. The temporal filter 430 may be a simple frame averager, employed, inter alia, for further bandwidth reduction of these signals. The output of temporal filter 430 is coupled to interlace-to-progressive converter circuit 435, which comprises a frame store that is read into in interlaced fashion, and read out of progressively, as known in the art. The output of interlace-to-progressive circuit 435 is one input to multiplexer 450. The multiplexer 450 operates to alternate the spatially filtered high definition scanlines with the scanlines from interlace-to-progressive circuit 435; i.e. one scanline from circuit 445 and then one scanline from circuit 435, and so on. It will be understood that in this and other embodiments, suitable equalizing delays can be provided as is known in the art, to equalize the signal traversal times.

As noted above, the high definition camera 440 is scanned, in the present embodiment, at 15 frames per second, progressive. The output of camera 440 is coupled to spatial filtering circuitry 445. As described in our above-mentioned Patent Specification, bandwidth can be saved by subtracting low definition components from the high definition signal before the recording or transmission thereof. Exemplary circuitry for achieving this function, in both the horizontal and vertical directions, is described in detail in the said prior Patent Specification. The outpt of spatial filtering circuitry 445, which now contains the high definition component at 525 lines, is coupled to the other input of multiplexer 450. The output of multiplexer 450 is coupled to the second channel input of video recorder 455.

Referring to Figure 5, there is shown an embodiment of a video play-back system for use in conjunction with the video recording system of Figure 4. The channel which carries the low (standard) definition luminance signal is coupled to delay circuit 460 which provides a frame delay to equalize for the progressive-to-interlace conversion in the other channel, as well as any other necessary equalizing delay. The output of the delay circuit is one input to summing circuit 465. The other channel of recorded video is coupled to demultiplexer 470 which separates the high definition luminance from the colour difference signals (i.e., the opposite function to that performed by multiplexer 450 of Figure 4) by routing successive alternating scanlines to its two output lines. The colour difference signals, which are still in the progressive form in which they were recorded, are coupled to progressive-to-interlace converter circuit 480, the output of which is coupled to demultiplexer 485 whose outputs are in turn coupled to time base correctors 486 and 487. These circuits operate to perform the inverse function of the circuits 421, 422 and 425 of Figure 4; i.e., to separate and then expand back to their original time base the colour difference signals R−Y and B−Y. The resultant colour difference signals are input to conventional RGB matrix 490. The demultiplexed luminance component YH, which is also in the progressive scan form in which it was recorded, is coupled to another progressive-to-interlace converter 475. The output of progressive-to-interlace converter 475 is coupled to the other input of summing circuit 465, which operates to combine the low and high definition luminance components. The resultant composite luminance component is a further input to the matrix 490, which is used to obtain the colour signals for driving a high resolution monitor 495. It will be understood that techiques described in our above-mentioned prior Patent Specification can be utilized, if desired, in the processing, combining and/or separating of the high and low (or standard) definition signal components. Also, as represented by the dashed line in Figure 5, the low (or standard) definition luminance can be coupled to the matrix 490 for use instead of the composite high definition luminance signal, such as in instance where conventional resolution output is all that is needed. In this same context, it will be understood that the recording system of Figure 4 can be adapted for use with only the low (or standard) resolution camera when the circumstances call for such application.

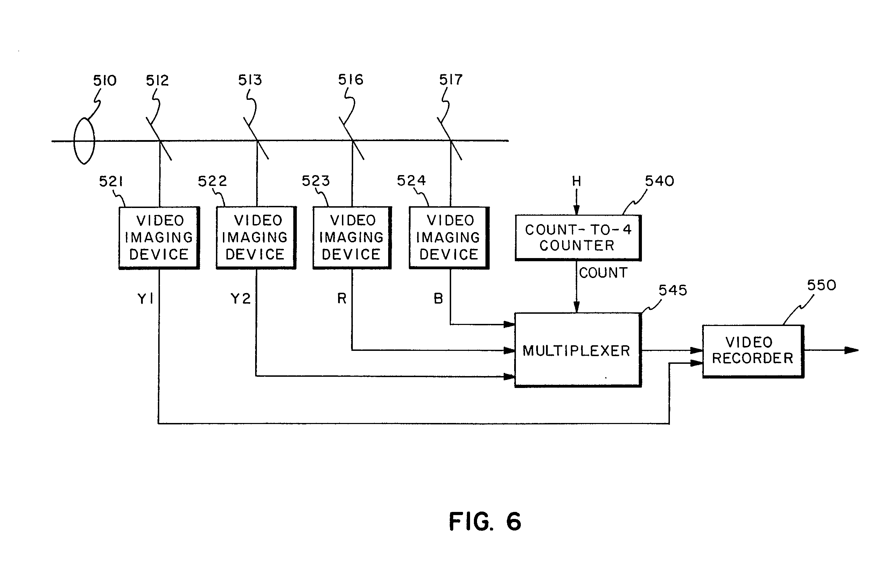

Referring to Figure 6, there is shown an embodiment of another form of the invention in which the high resolution component is developed using a further image sensing device which has only conventional resolution capability. In this embodiment a camera is provided with an optical subsystem which divides the light from the image into four optically registered beams; namely two luminance beams designated Y1 and Y2, and red and blue component beams designated R and B, respectively. In the diagram of Figure 6, 510 represents the camera lens system, 512 and 513 are beam splitters, and 516 and 517 are dichroic mirrors from which red and blue components are obtained (the green component not being used in this example). It will be understood that there are various alternative ways, for example using dichroic prisms, of splitting the light from the image into the desired luminance and colour components.

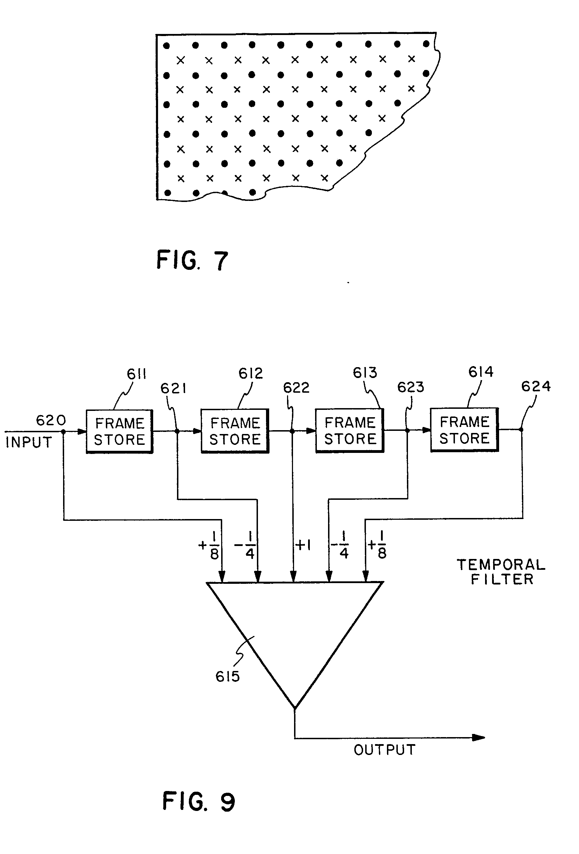

In the embodiment of Figure 6, four electronically synchronized and optically registered video imaging devices, such as devices having full frame resolution CCD camera chips, are provided, and are designated 521, 522, 523 and 524. The imaging devices 521 and 522 are used to obtain luminance component signals Y1 and Y2, respectively, and the imaging devices 523 and 524 are used to obtain colour component signals R and B, respectively. The imaging device 522 is displaced with respect to the imaging device 521 (and also with respect to imaging devices 523 and 524) such that the image appearing thereon is diagonally displaced by one half-pixel with respect to the image appearing on the imaging device 521. This is illustrated in Figure 7 wherein the pixel positions of the imaging devices 521 and 522 are shown superimposed, the pixel positions of the device 521 being represented by dots, and the pixel positions on the imaging device 522 being represented by x's.

By using the video signals output from the imaging devices 521 and 522, and combining them as will be further described hereinbelow, one can obtain a diagonally sampled image-representative signal with twice the vertical and twice the horizontal resolution of standard resolution television video. In the present embodiment, the imaging device 521 is scanned in standard NTSC manner at thirty frames (two interlaced fields per frame) per second, so that the output thereof (Y1) can be utilized as the standard resolution luminance. Since the signal to be used for the high resolution component can be scanned at a slower rate, the imaging device 522 is scanned, in the present embodiment, at a rate of 7.5 interlaced frames (15 fields) per second. The imaging devices 523 and 524, which produce the red and blue component signals are also scanned at a slower rate. In particular, the imaging device 523 is scanned at a rate of 15 interlaced frames (30 fields) per second, and the imaging device 524 is scanned at a rate of 7.5 interlaced frames (15 fields) per second.

The output of imaging device 521 is recorded on one channel of a two-channel video recorder 550 which may, again, be for example a "Betacam" type video recorder, manufactured by Sony Corporation. As previously described, temporal filtering may be provided in this channel. The outputs of the video imaging devices 522, 523 and 524 are multiplexed such that during every four conventional scanline periods there will be one scanline of Y2, one scanline of B and two scanlines of R. [This is consistent with Y1 and B being at 1/4 the conventional scan rate and R being at 1/2 the conventional scan rate.] Toward this end, a count-to-four line counter 540 is provided. The counter is reset at the beginning of each field, by means not shown. A multiplexer 545 receives the inputs from the video imaging devices 522, 523 and 524. Respective counts of 1, 2, 3 and 4 from counter 540 causes the multiplexer 545 to select Y2, R, B, and then Y2 again. The output of multiplexer 545 is recorded on the second channel of the video recorder 550.

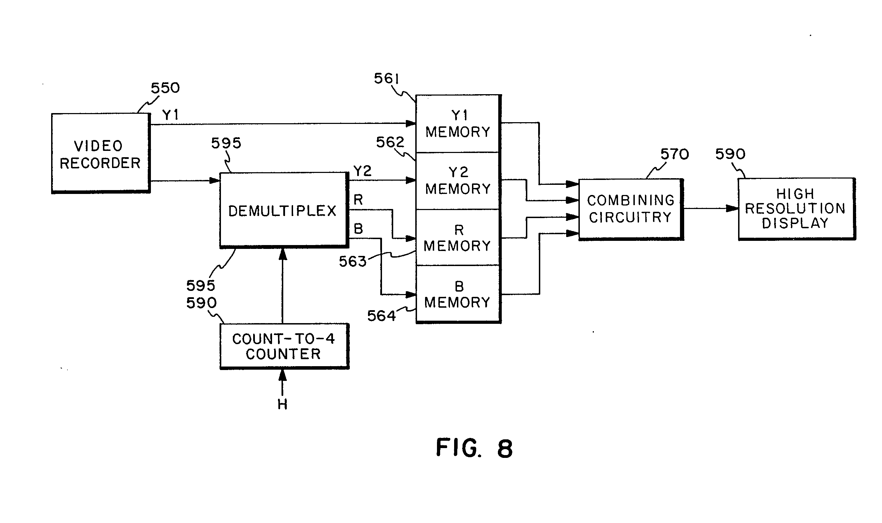

Figure 8 illustrates an embodiment of a system for playing back the video information recorded on video recorder 550 of Figure 6. Multi-ported video frame memories 561, 562, 563 and 564 are provided for the respective signals Y1, Y2, R and B. The luminance signal Y1 is coupled to frame memory 561. A count-to-four counter 590 is provided, which, as its counterpart in Figure 6, counts scanlines and is reset at each field. The counter controls selection by a demultiplexer 595 of a current scanline to be stored in the appropriate frame memory 562, 563 or 564. As in the recording portion of the circuitry, respective counts of 1, 2, 3 or 4 provide outputs to the memories for Y2, R, B and R, so that the recorded frames of information are recovered at the frame memories 562, 563 and 564. Combining circuitry 570, which may be of the type described in our above mentioned prior Patent Specification EU—A—0103488, is then utilized to obtain the high definition video signal, which can be displayed on high resolution display 590.

The Applicants have determined that an important factor in the observed loss of sharpness of moving television images is that the television camera, for the low resolution image, has a reduced rather than increased high temporal frequency response (as does the transient neuron system of human vision—see Figure 3). Accordingly, by selectively enhancing the temporal response of the low (or standard) resolution camera at around the peak of the human vision transient system's temporal response, which is around 10 Hertz, one can obtain moving images which appear sharper. To obtain a filter with a relatively flat temporal response and sharp cutoff, one can utilize a series of preferably at least three frame stores with both positive and negative coefficients that approximate the function (sin x)/x.

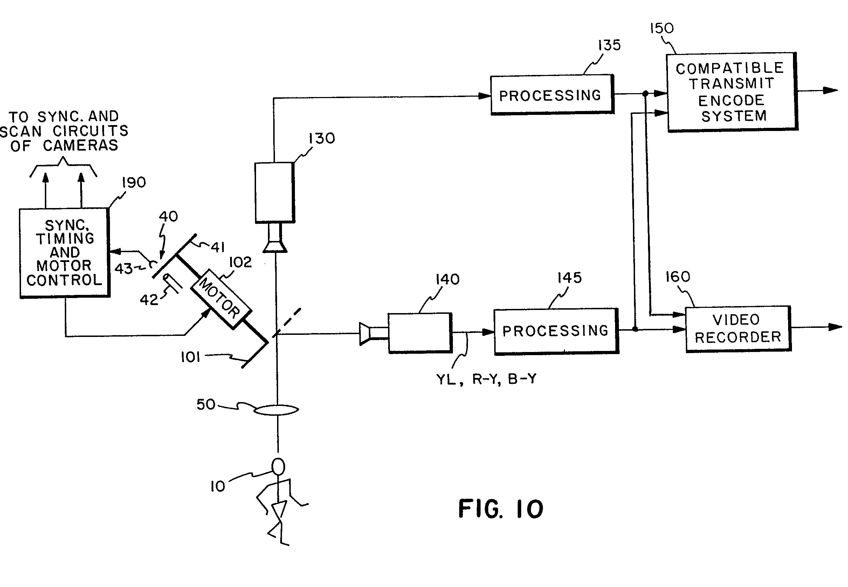

Referring to Figure 9, there is shown an example of a temporal filter of the type which may be utilized in the embodiment of Figure 4, or the other forms of the invention, as well as in conventional television systems, for providing temporal enhancement of video signals. Four frame stores 611, 612, 613 and 614 are arranged in a series arrangement, with the input signal being coupled into this series string via frame store 611. The terminal at the input of frame 611 is designated 620, and the terminals at the outputs of frame stores 611, 612, 613 and 614 are respectively designated by reference numerals 621, 622, 623 and 624. The five illustrated terminals are coupled to respective weighted inputs of summing amplifier 615. In the indicated example, the central terminal 622 (which can be considered, for purposes of understanding, as the real time image) is applied to the summing amplifier with a weight +1. The signals from adjacent terminals (i.e., separated in time from the real time image by one frame lead and one frame lag) are each applied to the summing amplifier 615 with respective weights of $-1/4$. Also, the signals from terminals 620 and 624, which respectively lead and lag the real time image by two video frames, are each applied to the summing amplifier 615 with a weight of $+1/8$.

In operation, the described temporal filter provides enhancement temporally in the low definition channel in a manner that is somewhat like what an image enhancer does spatially by subtracting signals on either side of an elemental region where detail is to be emphasized.

The embodiment of Figure 9 utilizes four frame stores, and with the weights set forth will provide a peak temporal response slightly above 10 Hz. The peak response can be lowered by using more frame stores, and the weighting factors can be selected to further tailor the enhancement to the peak temporal response of the eye, while maintaining a desirable response curve shape.

Figure 10 illustrates an embodiment of a video camera system with high definition capability, in accordance with a form of the invention. The video image sensors, processors, transmit and record blocks 130, 135, 140, 145, 150 and 160, are in accordance with their counterparts in Figure 1.

The present embodiment provides further improvement by making efficient use of light from the scene while being compatible with considerations of imager sensitivity, relative exposure time, and dynamic resolution of the video imaging devices.

Shutters are commonly employed in film cameras, the shutter typically being a mirror which diverts the image onto a viewfinder. Certain solid state camera chips, such as CCD camera chips, use a shutter to prevent exposure during the time that the video signal is being read from the light sensitive regions to the storage regions. Shutters have also been employed in television cameras to improve dynamic response. In these cases the shutter prevents a portion of the light from contributing to the main image. In the present invention, the shutter is always directing light to at least one of the video imaging devices, and since both of these devices contribute to the ultimately reconstructed high definition image, there is little wasted light energy as a result of the shuttering operation. Also, the shutter cycle can be selected to provide proportions of light energy to the first and second video imaging devices to obtain desired signal-to-noise ratios. Further, the shuttering operation improves dynamic resolution, which is particularly important in the low resolution portion of the image, since the temporal response of the human eye is more sensitive with respect to the lower spatial resolution components of an image.

In accordance with the improvement of this embodiment, a reflective rotating shutter 101 is positioned in the path of light received from a scene 10, via optics represented by lens 50. Depending upon the rotational orientation of shutter 101, light from the scene is either passed directly to camera 130 or is reflected to camera 140. The reflective rotating shutter is rotated by rotational drive means which, in the Figure, is represented by motor 102 that is under control of a signal from sync and timing circuitry 190.

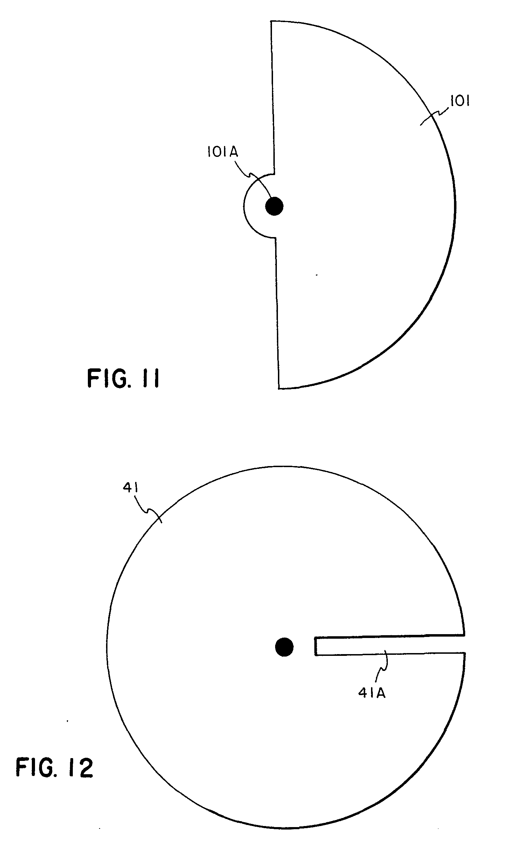

An embodiment of the rotatable reflective shutter is shown in Figure 11. In the ullustration a mirror of semicircular shape is utilized, and driven on its axis 101A, by the motor 102. In this case, the reflective surface subtends 180 degrees of arc, but other suitable angles greater or less than 180 degrees can be employed, depending upon characteristics of the respective cameras and design considerations, as discussed herein. The motor shaft has an optical encoder 40 associated therewith, the optical encoder including an opaque encoder disk 41 (see Figure 12) and a light-emitting diode 42 and photodiode 43 on opposing sides of the disk 41. The encoder disk includes a radial slit 41A. The light-emitting diode 42 is energized (by means not shown), and the photodiode produces an output signal, coupled to sync and timing generator 190, each time the slit 41A passes between the light-emitting diode and the photodiode, thereby generating a reference signal for the motor shaft angular position and the shutter angular position. The manner in which this signal is utilized is described below.

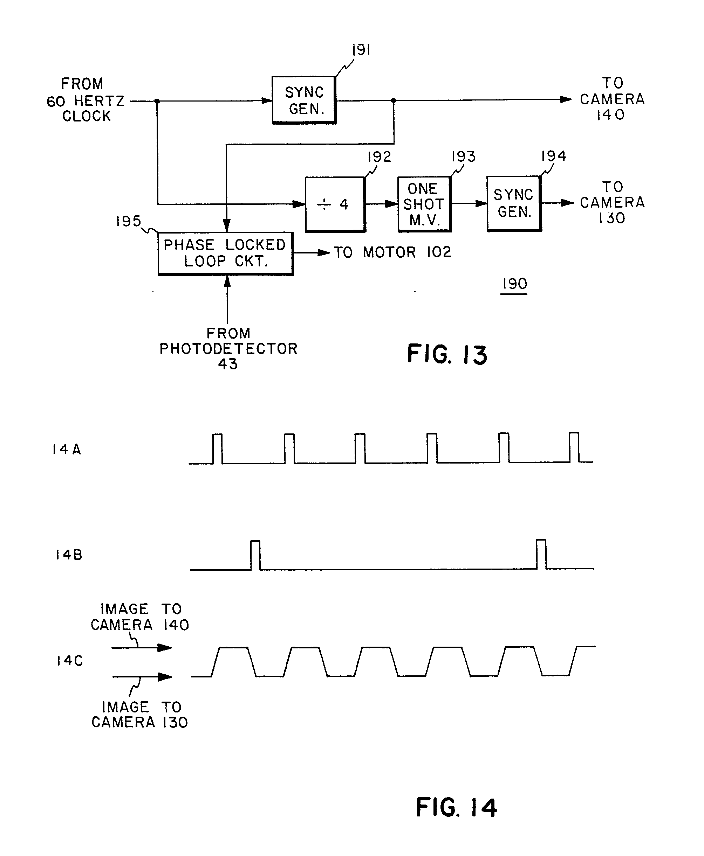

Referring to Figure 13, there is shown a block diagram of the sync, timing and motor control circuit 190, in accordance with the present embodiment of the invention. A signal from a sixty Hertz clock is coupled to a sync generator 191 for the low (or standard) resolution camera 140. The sixty Hertz clock signal is also coupled to a divide-by-four frequency divider 192 whose output is coupled to a one-shot multivibrator 193 whose output is, in turn, coupled to a sync generator 194 for the high resolution camera 130. The outputs of the sync generators 191 and 193 are utilized to generate the synchronizing and scanning signals for the cameras 130 and 140, respectively, in known manner. The output of sync generator 191 is also coupled to a phase locked loop 195 which produces an output DC level that is used for driving motor 102 (Figure 10). The phase locked loop also receives, as a phase control signal, the reference position signal from the photodetector 43 (Figure 10) of the optical encoder 40.

Figure 14 illustrates the nature of signals in the Figure 13 circuitry in relationship to the status of the reflective rotating shutter 101, as controlled by the motor 102. Graph 14A illustrates the vertical sync signals, as taken at the output of the sync generator 191, these signals being at a 60 Hertz rate in the present embodiment. These signals are also coupled to the phase locked loop 195 associated with motor 102 so that the motor rotates at a 60 Hertz rate. This is seen from graph 14C, which shows the status of shutter 101 (driven by the motor), which alternately, at 60 Hertz, either allows the image to be passed to camera 130, or reflects the image to camera 140. The rise and fall ramps on this graph indicate the times during which a portion of the image is going to both cameras. The phase of the rotation is also adjusted, using the output signal from the optical encoder, such that the vertical synchronizing signal occurs at a point in the shutter rotational cycle when the light from the image is all going to high resolution camera 130. (This is readily done by preadjusting the angular positions of the shutter and the encoder disc.) In this manner, the vertical retrace of camera 140 is set to occur when no light from the image is going to camera 140. The one-shot multivibrator 192 is set to cause the vertical sync signal to camera 130 (graph 14B) to occur at fixed time with respect to the 60 Hertz reference, such that the vertical retrace of the camera 130 starts when no light from the image is going to camera 130.

It will be understood that the shutter can be designed to direct light to the cameras for respective fractions of a time cycle that take account of the relative sensitivities and exposure times of the imaging devices being employed. For example, since the high resolution camera is scanned at a slower scan rate, if all other things were equal, the shutter could direct light to the high resolution camera for a smaller percentage of the cycle, to obtain the same signal-to-noise ratios for the high and low resolution cameras. (If the low resolution camera is a colour camera, and the high resolution camera a monochrome camera, as in the described preferred embodiment, the light the low resolution camera receives, will be shared between the imaging devices for the different colour components, which would further skew the balance toward having more light go to the low resolution camera.) However, other factors, such as the sensitivity and relative aperture sizes of the imaging device, also come into play. For example, if the high resolution monochrome camera is a saticon, and if the low resolution camera uses three solid state CCD imaging devices (which are much more sensitive than saticons), one would want more light to go to the high resolution camera to better balance signal-to-noise ratios. If the high resolution camera also has a larger imaging surface (and therefore less light-per-unit-area for a given amount of light) more light to the high resolution camera would also be warranted. In the described embodiment, these factors yield a cycle with about equal exposure times for the low and high resolution cameras.

The invention has been described with reference to particular preferred embodiments, but variations within the scope of the invention as claimed will occur to those skilled in the art. For example, it will be understood that suitable equalizing delays can be provided in the various embodiments, as necessary. Further, while certain of the techniques hereof are illustrated in the context of video recording systems, it will be understood that these techniques may also have application with respect to direct display and/or transmission and/or recording on other types of storage media.

**Claims**

1. Video camera apparatus for generating video signals representative of images of a scene, comprising first video imaging means (140; 521) and second video imaging means (130; 522, 523, 524); and optical means (111; 512, 513, 516, 517) for directing light from the scene to the first and second video imaging means; characterised by: means for scanning the first video imaging means (140; 521) at a first frame rate; means for scanning the second video imaging means (130; 522, 523, 524) at a second frame rate which is slower than the said first frame rate; and means (150, 160, Fig. 1) for combining components of the outputs of the first and second video imaging means.

2. Apparatus as defined by claim 1, wherein the optical means (111) is operative to direct substantially the same optical image to the first and second video imaging means.

3. Apparatus as defined by claim 1 or 2, wherein the optical means (101, Fig. 10) is operative to direct light from the scene alternately to the first video imaging means (140) and the second video imaging means (130).

4. Apparatus as defined by claim 1, 2 or 3, wherein the first frame rate is 30 frames per second, and the second frame rate is not greater than 15 frames per second.

5. Apparatus as defined by any one of claims 1 to 4, wherein the means (101, 102, 41, 190) for directing light is adapted to direct light to the second video imaging means (130) during periods of time which include the vertical blanking periods of the first video imaging means (140).

6. Apparatus as defined by any one of claims 1 to 5, further comprising means for transmitting the combined output components of the first and second imaging means.

7. Apparatus as defined by any one of claims 1 to 5, further comprising means (160) for recording the outputs of the first and second imaging means.

8. Apparatus as defined by any one of the preceding claims, wherein the second video imaging means (130) has a higher spatial resolution than the first video imaging means (140).

9. Apparatus as defined by any one of the claims 1 to 8, wherein the first video imaging means (140) comprises a colour television camera and the second video imaging means (130) comprises a monochrome television camera.

10. Apparatus as defined by claim 9, wherein the means for scanning the colour television camera (140) comprises means for interlace scanning the colour television camera, and wherein the means for scanning the monochrome television camera (130) comprises means for progressively scanning the monochrome television camera.

11. Apparatus as defined by any one of the preceding claims, wherein the first and second video imaging means are arranged to have substantially the same image on their respective photosensitive surfaces, the image on one of the video imaging means (522) being displaced by one diagonal pixel position with respect to the image on the other of the said video imaging means (521).

12. Apparatus as defined by any one of the preceding claims, further comprising means (415) for temporally filtering the output of the first video imaging means with a temporal filter that has enhanced temporal response in the temporal frequency range in which the human eye has maximum responsiveness.

13. A method for generating video signals representative of images of a scene, comprising the steps of: directing light from the scene to first and second video imaging means (140, 130) such that they receive substantially the same optical image; and characterised by scanning the first video imaging means (140) at a first frame rate; scanning the second video imaging means (130) at a second frame rate which is slower than the first frame rate; and combining (150, 160, Fig. 1) components of the outputs of the first and second video imaging means.

14. A method of recording video signals representative of images of a scene, characterized by the steps of: directing light from the scene to a monochrome television camera (440) and a colour television camera (410) such that the cameras receive substantially the same optical image; scanning the colour television camera (410) at a first frame rate; scanning the monochrome television camera (440) at a second frame rate which is slower than the first frame rate; recording a luminance component signal (YL) from the colour television camera (410) on one of the recording channels of a video recording device (455) having at least two recording channels; combining an output of the monochrome television camera (410) with colour component signals from the colour television camera to obtain a combined signal; and recording the combined signal on another channel of the video recording device (455).

15. A method as defined by claim 14, wherein the monochrome television camera is progressively scanned and the colour television camera is interlace-scanned.

16. Video camera apparatus for generating video signals representative of images of a scene, characterized by: first, second, third and fourth video imaging devices (521, 522, 523, 524); optical means (512, 513, 516, 517) for directing light from the scene to all of the video imaging devices such that they receive substantially the same image, with the third and fourth video imaging devices (516, 517) receiving different colour components of the image, and the image of the first video imaging device (521) being displaced by one diagonal pixel position with respect to the image on the second video imaging device (522); means for scanning the first video imaging device (521) at a first frame rate; means for scanning the second, third and fourth video imaging devices (522, 523, 524) at second frame rates which are slower than the first frame rate; and means (545) for combining outputs of the second, third and fourth video imaging devices.

17. Apparatus as defined by claim 16, further comprising means for recording an output of the first video imaging device (521) on one channel of a video recording device (550), and means for recording the combined outputs of the second, third and fourth video imaging devices (522, 523, 524) on a second channel of the said video recording device (550).

18. Apparatus as defined by claim 12, wherein the means for temporally filtering the video signal comprises at least three frame store devices (611, 612, 613, 614) connected in series; means for applying the video signal to the first frame store device (611) of the series; a summing circuit (615) having at least four weighted inputs; means for applying the outputs of the frame store devices and the input video signal to the summing circuit (615), the outputs of at least two of the frame store devices being applied with a negative weight, and the outputs of at least some of the frame store devices being applied with a positive weight; the number of frame store devices in the series and the weightings of the summing circuit being selected such that the output of the summing circuit has an increased temporal response, as compared to the input video signal, in the temporal frequency range in which the human eye has maximum responsiveness.

19. Apparatus as defined by claim 18, wherein the increased temporal response is in the frequency range around approximately 10 Hertz.

**Patentansprüche**

1. Videokameraanordnung zum Erzeugen von Videosignalen, die für Bilder einer Szene repräsentativ sind, mit einer ersten Videobildaufnahmeeinrichtung (140; 521) und einer zweiten Videobildaufnahmeeinrichtung (130; 522, 523, 524) und einer optischen Anordnung (111; 512, 513, 516, 517) zum Lenken von Licht von der Szene auf die erste und die zweite Videobildaufnahmeeinrichtung, gekennzeichnet durch eine Anordnung zum Abtasten der ersten Videobildaufnahmeeinrichtung (140; 512) mit einer ersten Bildrate; eine Anordnung zum Abtasten der zweiten Videobildaufnahmeeinrichtung (130; 522, 523, 524) mit einer zweiten Bildrate, die langsamer ist als die erste Bildrate; und eine Anordnung (150, 160, Fig. 1) zum Kombinieren von Komponenten der Ausgangssignale der ersten oder zweiten Bildaufnahmeeinrichtung.

2. Anordnung nach Anspruch 1, dadurch gekennzeichnet, daß die optische Anordnung (111) im wesentlichen das gleiche optische Bild auf die erste und die zweite Videobildaufnahmeeinrichtung lenkt.

3. Anordnung nach Anspruch 1 oder 2, dadurch gekennzeichnet, daß die optische Anordnung (101, Fig. 10) Licht von der Szene alternierend auf die erste Videobildaufnahmeeinrichtung (140) und die zweite Videobildaufnahmeeinrichtung (130) lenkt.

4. Anordnung nach Anspruch 1, 2 oder 3, dadurch gekennzeichnet, daß die erste Bildrate 30 Bilder pro Sekunde ist und daß die zweite Bildrate nicht größer als 15 Bilder pro Sekunde ist.

5. Anordnung nach einem der Ansprüche 1 bis 4, dadurch gekennzeichnet, daß die Anordnung (101, 102, 41, 190) zum Richten von Licht in der Lage ist, Licht auf die zweite Videobildaufnahmeeinrichtung (130) während Zeitperioden zu richten, welche die Vertikalaustastperioden der ersten Videoaufnahmeeinrichtung (140) umfassen.

6. Anordnung nach einem der Ansprüche 1 bis 5, dadurch gekennzeichnet, daß sie weiterhin eine Anordnung zum Übertragen der kombinierten Ausgangssignalkomponenten der ersten und der zweiten Bildaufnahmeeinrichtung enthält.

7. Anordnung nach einem der Ansprüche 1 bis 5, dadurch gekennzeichnet, daß sie weiterhin eine Anordnung (160) zum Aufzeichnen der Ausgangssignale der ersten und der zweiten Bildaufnahmeeinrichtung enthält.

8. Anordnung nach einem der vorhergehenden Ansprüche, dadurch gekennzeichnet, daß die zweite Videobildaufnahmeeinrichtung (130) eine höhere räumliche Auflösung hat als die erste Videobildaufnahmeeinrichtung (140).

9. Anordnung nach einem der Ansprüche 1 bis 8, dadurch gekennzeichnet, daß die erste Videobildaufnahmeeinrichtung (140) eine Farbfernsehkamera enthält und daß die zweite Videobildaufnahmeeinrichtung (130) eine monochrome Fernsehkamera enthält.

10. Anordnung nach Anspruch 9, dadurch gekennzeichnet, daß die Abtastanordnung der Farbfernsehkamera (140) eine Anordnung zum Zwischenzeilen-Abtasten der Farbfernsehkamera enthält, und daß die Abtastanordnung der monochromene Fernsehkamera (130) eine Anordnung zum fortlaufenden Abtasten der monochromen Fernsehkamera enthält.

11. Anordnung nach einem der vorhergehenden Ansprüche, dadurch gekennzeichnet, daß die erste und zweite Videobildaufnahmeeinrichtung so angeordnet sind, daß sie im wesentlichen das gleiche Bild auf ihren jeweiligen photoempfindlichen Oberflächen aufweisen, wobei das Bild auf einer der Videobildaufnahmeeinrichtungen (522) um eine eine diagonale Pixelposition bezüglich des Bildes auf der anderen Videobildaufnahmeeinrichtung (521) versetzt ist.

12. Anordnung nach einem der vorhergehenden Ansprüche, dadurch gekennzeichnet, daß sie weiterhin eine Anordnung (415) zum zeitlichen Filtern des Ausgangssignales der ersten Videobildaufnahmeeinrichtung mit einem Zeit-Filter enthält, welches eine angehobene zeitliche Ansprache in demjenigen Zeitfrequenzbereich hat, in dem das menschliche Auge seine maximale Ansprechempfindlichkeit hat.

13. Verfahren zum Erzeugen von Videosignalen, welche Bilder einer Szene repräsentieren, mit den Verfahrensschritten: Richten von Licht von der Szene auf eine erste und eine zweite Videobildaufnahmeeinrichtung (140, 130) derart, daß diese im wesentlichen das gleiche optische Bild erhalten, gekennzeichnet durch Abtasten der ersten Videobildaufnahmeeinrichtung (140) mit einer ersten Bildrate; Abtasten der zweiten Videobildaufnahmeeinrichtung (130) mit einer zweiten Bildrate, die kleiner ist als die erste Bildrate, und Vereinigen (150, 160, Fig. 1) von Komponenten der Ausgangssignale der ersten oder zweiten Bildaufnahmeeinrichtung.

14. Verfahren zum Aufzeichnen von Videosignalen, die Bilder einer Szene repräsentieren, gekennzeichnet durch die Verfahrensschritte: Richten von Licht von der Szene auf eine monochrome Fernsehkamera (440) und eine Farbfernsehkamera (410) derart, daß die Kameras im wesentlichen das gleiche optische Bild erhalten; Abtasten der Farbfernsehkamera (410) mit einer ersten Bildrate; Abtasten der monochromen Fernsehkamera (440), mit einer zweiten Bildrate, die langsamer ist als die erste Bildrate; Aufzeichnen eines Leuchtdichteanteilsignales (YL) von der Farbfernsehkamera (410) auf einem der Aufzeichnungskanäle einer Videoaufzeichnungseinrichtung (455), die mindestens zwei Aufzeichnungskanäle aufweist; Kombinieren eines Ausgangssignales der monochromen Fernsehkamera (410) mit Farbanteilsignalen von der Farbernsehkamera zum Erzeugen eines kombinierten Signales, und Aufzeichnen des kombinierten Signales auf einem anderen Kanal der Videoaufzeichnungseinrichtung (455).

15. Verfahren nach Anspruch 14, dadurch gekennzeichnet, daß die monochrome Fernsehkamera fortlaufend abgetastet wird und daß die Farbfernsehkamera mit Zeilensprung abgetastet wird.

16. Videokameraanordnung zum Erzeugen von Videosignalen, welche für Bilder einer Szene repräsentativ sind, gekennzeichnet durch eine erste, eine zweite, eine dritte und eine vierte Videobildaufnahmeeinrichtung (521, 522, 523, 524); eine optische Anordnung (512, 513, 516, 517) zum Lenken von Licht von der Szene auf alle Videobildaufnahmeeinrichtungen derart, daß diese im wesentlichen das gleiche Bild erhalten, wobei die dritte und die vierte Videobildaufnahmeeinrichtung (516, 517) verschiedene Farbanteile des Bildes erhalten und das Bild der ersten Videobildaufnahmeeinrichtung (521) um eine diagonale Pixelposition bezüglich des Bildes auf der zweiten Videobildaufnahmeeinrichtung (522) versetzt ist; eine Anordnung zum Abtasten der ersten Videobildaufnahmeeinrichtung (521) mit einer ersten Bildrate; einer Anordnung zum Abtasten der zweiten, der dritten und der vierten Videobildaufnahmeeinrichtung (522, 523, 524) mit einer zweiten Bildrate, die langsamer ist als die erste Bildrate; und eine Anordnung (545) zum Kombinieren der Ausgangssignale der zweiten, der dritten und der vierten Videobildaufnahmeeinrichtung.

17. Anordnung nach Anspruch 16, dadurch gekennzeichnet, daß sie weiterhin eine Anordnung zum Aufzeichnen eines Ausgangssignales der ersten Videobildaufnahmeeinrichtung (521) auf einem Kanal einer Videoaufzeichnungseinrichtung (550) und eine Anordnung zum Aufzeichnen der kombinierten Ausgangssignale der zweiten, der dritten und der vierten Videobildaufnahmeeinrichtung (522, 523, 524) auf einem zweiten Kanal der Videoaufzeichnungseinrichtung (550) enthält.

18. Anordnung nach Anspruch 12, dadurch gekennzeichnet, daß die Anordnung zur zeitlichen Filterung des Videosignales mindestens drei in Reihe geschaltete Bildspeichereinrichtungen (611, 612, 613, 614); eine Anordnung zum Anlegen des Videosignales an die erste Bildspeichereinrichtung (611) der Reihe; eine Summierschaltung (615) mit mindestens vier gewichteten Eingängen; eine Anordung zum Anlegen der Ausgangssignale der Bildspeichereinrichtungen und des Eingangsvideosignales an die Summierschaltung (615) enthält, wobei die Ausgangssignale von mindestens zwei der Bildspeichereinrichtungen mit negativem Gewicht angelegt werden und die Ausgangssignale mindestens gewisser Bildspeichereinrichtungen mit einem positiven Gewicht angelegt werden und wobei die Anzahl der Bildspeichereinrichtungen in der Reihenschaltung sowie die Wichtungen der Summierschaltung so gewählt sind, daß das Ausgangssignal der Summierschaltung eine im Vergleich zum Eingangsvideosignal angehobene zeitliche Ansprache im Zeitfrequenzbereich hat, in dem das menschliche Auge seine maximale Ansprechfähigkeit aufweist.

19. Einrichtung nach Anspruch 18, dadurch gekennzeichnet, daß die angehobene zeitliche Ansprache im Frequenzbereich um etwa 10 Hz liegt.

**Revendications**

1. Appareil à caméra vidéo pour la génération de signaux vidéo représentatifs d'images d'une scène, comprenant des premiers moyens (140; 521) de formation d'images vidéo et des seconds moyens (130; 522, 523, 524) de formation d'images vidéo; et des moyens optiques (111; 512, 513, 516, 517) destinés à diriger la lumière provenant de la scène sur les premiers et seconds moyens de formation d'images vidéo; caractérisé par: des moyens destinés à analyser les premiers moyens (140; 521) de formation d'images vidéo à une première cadence d'images; des moyens destinés à analyser les seconds moyens (130; 522, 523, 524) de formation d'images vidéo à une seconde cadence d'imagés qui est plus lente que ladite première cadence d'images; et des moyens (150, 160, figure 1) destinés à combiner des composantes des signaux de sortie des premiers et seconds moyens de formation d'images vidéo.

2. Appareil selon la revendication 1, dans lequel les moyens optiques (111) ont pour effet de diriger sensiblement la même image optique sur les premiers et seconds moyens de formation d'images vidéo.

3. Appareil selon la revendication 1 ou 2, dans lequel les moyens optiques (101, figure 10) ont pour effet de diriger la lumière provenant de la scéne alternativement sur les premiers moyens (140) de formation d'images vidéo et les seconds moyens (130) de formation d'images vidéo.

4. Appareil selon la revendication 1, 2 ou 3, dans lequel la première cadence d'images est de 30 images par seconde et la seconde cadence d'images n'est pas supérieure à 15 images per seconde.

5. Appareil selon l'une quelconque des revendications 1 à 4, dans lequel les moyens (101, 102, 41, 190) destinés à diriger la lumière sont conçus pour diriger de la lumière sur les seconds moyens (130) de formation d'images vidéo durant des périodes de temps qui comprennent les périodes de suppression verticale des premiers moyens (140) de formation d'images vidéo.

6. Appareil selon l'une quelconque des revendications 1 à 5, comprenant en outre des moyens destinés à transmettre les composantes de sortie combinées des premiers et seconds moyens de formation d'images.

7. Appareil selon l'une quelconque des revendications 1 à 5, comprenant en outre des moyens (160) destinés à enregistrer les signaux de sortie des premiers et seconds moyens de formation d'images.

8. Appareil selon l'une quelconque des revendications précédentes, dans lequel les seconds moyens (130) de formation d'images vidéo ont une résolution spatiale supérieure à celle des premiers moyens (140) de formation d'images vidéo.

9. Appareil selon l'une quelconque des revendications 1 à 8, dans lequel les premiers moyens (140) de formation d'images vidéo comprennent une caméra de télévision en couleur et les seconds moyens (130) de formation d'images vidéo comprennent une caméra de télévision monochrome.

10. Appareil sels la revendication 9, dans lequel les moyens destinés à analyser la caméra (140) de télévision en couleur comprennent des moyens destinés à analyser par entrelacement la caméra de télévision en couleur, et dans lequel les moyens destinés à analyser la caméra (130) de télévision monochrome comprennent des moyens destinés à analyser progressivement la caméra de télévision monochrome.

11. Appareil selon l'une quelconque des revendications précédentes, dans lequel les premiers et seconds moyens de formation d'images vidéo sont agencés de façon à avoir sensiblement la même image sur leurs surfaces photosensibles respectives, l'image sur l'un des moyens (522) de formation d'images vidéo étant décalée d'une position de pixel en diagonale par rapport à l'image sur l'autre desdits moyens (521) de formation d'images vidéo.

12. Appareil selon l'une quelconque des revendications précédentes, comprenant en outre des moyens (415) destinés à filtrer de façon temporelle le signal de sortie des premiers moyens de formation d'images vidéo à l'aide d'un filtre temporel qui possède une réponse temporelle renforcée dans la gamme de fréquence temporelle dans laquelle l'oeil humain a une sensibilité maximale.

13. Procédé pour générer des signaux vidéo représentatifs d'images d'une scène, comprenant les étapes qui consistent: à diriger de la lumière provenant de la scéne sur des premiers et seconds moyens (140, 130) de formation d'images vidéo afin qu'ils reçoivent sensiblement la même image optique; et caractérisé par une analyse des premiers moyens (140) de formation d'images vidéo à une première cadence d'images; une analyse des seconds moyens (130) de formation d'images vidéo à une seconde cadence d'images qui est plus lente que la première cadence d'images; et une combinaison (150, 160, figure 1) de composantes des signaux de sortie des premiers et seconds moyens de formation d'images vidéo.

14. Procédé d'enregistrement de signaux vidéo représentatifs d'images d'une scène, caractérisé par les étapes qui consistent: à diriger de la lumière provenant de la scène sur une caméra de télévision monochrome (440) et une caméra de télévision en couleurs (410) afin que les caméras reçoivent sensiblement la même image optique; à analyser la caméra (410) de télévision en couleur à une première cadence d'images; à analyser la caméra (440) de télévision monochrome à une seconde cadence d'images qui est plus lente que la première cadence d'images; à enregistrer un signal YL de composante de luminance provenant de la caméra (410) de télévision en couleur sur l'un des canaux d'enregistrement d'un dispositif (455) d'enregistrement vidéo ayant au moins deux canaux d'enregistrement; à combiner un signal de sortie de la caméra (410) de télévision monochrome avec des signaux de composante de couleur provenant de la caméra de télévision en couleur pour obtenir un signal combiné; et à enregistrer le signal combiné sur un autre canal du dispositif (455) d'enregistrement vidéo.

15. Procédé suivant la revendication 14, dans lequel la caméra de télévision monochrome est analysée progressivement et la caméra de télévision en couleur est analysée de façon entrelacée.

16. Appareil à caméra vidéo pour la génération de signaux vidéo représentatifs d'images d'une scène, caractérisé par: des premier, deuxième, troisième et quatrième dispositifs (521, 522, 523, 524) de formation d'images vidéo; des moyens optiques (512, 513, 516, 517) destinés à diriger de la lumière provenant de la scène sur tous les dispositifs de formation d'images vidéo afin qu'ils reçoivent sensiblement la même image, les troisième et quatrième dispositifs (516, 517) de formation d'images vidéo recevant des composantes de couleurs différentes de l'image, et l'image du premier dispositif (521) de formation d'images vidéo étant décalée d'une position de pixel en diagonale par rapport à l'image sur le deuxième dispositif (522) de formation d'images vidéo; des moyens destinés à analyser le premier dispositif (521) de formation d'images vidéo à une première cadence d'images; des moyens destinés à analyser les deuxième, troisième et quatrième dispositifs (522, 523, 524) de formation d'images vidéo à des secondes cadences d'images qui sont plus lentes que la première cadence d'images; et des moyens (545) destinés à combiner les signaux de sortie des deuxième, troisième et quatrième dispositifs de formation d'images vidéo.

17. Appareil selon la revendication 16, comprenant en outre des moyens destinés à enregistrer un signal de sortie du premier dispositif (521) de formation d'images vidéo sur un canal d'un dispositif (550) d'enregistrement vidéo, et des moyens destinés à enregistrer les signaux de sortie combinés des deuxième, trousième et quatrième dispositifs (522, 523, 524) de formation d'images vidéo sur un second canal dudit dispositif (550) d'enregistrement vidéo.

18. Appareil selon la revendication 12, dans lequel les moyens destinés à filtrer de façon temporelle le signal vidéo comprennent au moins trois dispositifs (611, 612, 613, 614) de mémorisation d'images connectés en série; des moyens destinés à appliquer le signal vidéo au premier dispositif (611) de mémorisation d'images de la série; un circuit (615) de sommation ayant au moins quatre entrées pondérées; des moyens destinés à appliquer les signaux de sortie des dispositifs de mémorisation d'images et le signal vidéo d'entrée au circuit (615) de sommation, les signaux de sortie d'au moins deux des dispositifs de mémorisation d'images étant appliqués avec une pondération négative, et les signaux de sortie d'au moins certains des dispositifs de mémorisation d'images étant appliqués avec une pondération positive; le nombre de dispositifs de mémorisation d'images dans la série et les pondérations du circuit de sommation étant choisis de manière que le signal de sortie du circuit de sommation possède une réponse temporelle accrue, en comparaison avec le signal vidéo d'entrée, dans la gamme des fréquences temporelles dans laquelle l'oeil humain a une sensibilité maximale.

19. Appareil selon la revendication 18, dans lequel la réponse temporelle accrue est dans la gamme de fréquences d'environ 10 hertz.

FIG. 1

FIG. 2

SPATIAL FREQ. RESPONSE

FIG. 3

TEMPORAL FREQ. RESPONSE

FIG. 4

FIG. 5

4

FIG. 6

FIG. 7

FIG. 9

FIG. 8

FIG. 10

FIG. 11

101A

101

FIG. 12

41

41A

FROM
60 HERTZ
CLOCK

191

SYNC
GEN.

TO
CAMERA
140

192        193        194

÷ 4        ONE
SHOT
M.V.        SYNC
GEN.        TO
CAMERA
130

195

PHASE LOCKED
LOOP CKT.        TO MOTOR 102

190

FROM
PHOTODETECTOR
43

**FIG. 13**

14A

14B

IMAGE TO
CAMERA 140

14C

IMAGE TO
CAMERA 130

**FIG. 14**